(19) **Europäisches Patentamt European Patent Office Office européen des brevets**

(11) **EP 4 644 958 A1**

(12) **EUROPEAN PATENT APPLICATION**

(43) Date of publication:
**05.11.2025 Bulletin 2025/45**

(21) Application number: **24382470.3**

(22) Date of filing: **30.04.2024**

(51) International Patent Classification (IPC):
***G02B 6/28*** *(2006.01)*

(52) Cooperative Patent Classification (CPC):
**G02B 6/2861;** G02F 2203/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **Universitat Politécnica de Valencia
  46022 Valencia (ES)**
- **Institut National de la Recherche Scientifique
  Québec, QC G1K 9A9 (CA)**

(72) Inventors:
- **CAPMANY, Jose
  Valencia (ES)**
- **PÉREZ, Daniel
  Valencia (ES)**
- **AZAÑA, José
  Quebec (CA)**

(74) Representative: **Pons IP
Glorieta Rubén Darío 4
28010 Madrid (ES)**

(54) **PROGRAMMABLE PHOTONIC INTEGRATED CIRCUIT AND METHOD OF IMPLEMENTATION OF A TEMPORAL TALBOT PROCESSOR USING SAID CIRCUIT**

(57)    The object of the invention falls within the technical field of photonics related with the implementation of a temporal Talbot processor using programmable photonic integrated circuits.

**Description**

**OBJECT OF THE INVENTION**

The object of the invention falls within the technical field of physics.

More specifically, the scope of the object of the invention is within the field of photonics related with the implementation of a temporal Talbot processor using programmable photonic integrated circuits.

**BACKGROUND OF THE INVENTION**

The temporal Talbot effect is a simple and efficient technique to change the repetition rate of a periodic train of optical pulses that has enabled a completely new area within the field of optical signal processing.

T. Jannson and J. Jannson in "Temporal self-imaging effect in single-mode fibers," J. Opt. Soc. Am., 71, 1373-1376 (1981)" discloses the self-imaging effect of the signal propagation in a single-mode fiber characterized by the temporal transfer function $G(\omega',z)$, that is, from a formal point of view, analogous to the Talbot effect.

J. Azaña and M. A. Muriel, "Temporal self-imaging effects: theory and application for multiplying pulse repetition rates," IEEE J. Sel. Top. Quantum Electron., 7, 728-744 (2001)" describes in detail the conditions and input-output relations for the temporal talbot or self-imaging effects.

This Talbot effect has been used in an extensive list of applications that span laser physics, signal processing and telecommunications, for example in "H. Guillet de Chatellus, E. Lacot, W. Glastre, O. Jacquin, and O. Hugon, "Theory of Talbot lasers," Phys. Rev. A, 88, 033 828 (2013)"

In "L. Romero Cortes, Generalized Talbot effect theory and application to advanced optical wave processing, PhD Thesis, INRS, Montreal, Canada, (2018)" the output signal from a medium providing a transfer function is described.

However, none of the previous documents discloses how to implement a temporal Talbot processor using programmable photonic circuits.

**DESCRIPTION OF THE INVENTION**

The invention relates to a programmable photonic integrated circuit configured to implement a temporal Talbot processor.

For the explanation of the implementation of a temporal Talbot processor using programmable photonic circuits according to the invention, it has been considered a periodic train of pulses (with repetition period given by T), its representation in the dual Fourier Domain (i.e., the frequency spectrum) is a frequency comb with linear line spacing given by $f_r=1/T$. The temporal Talbot effect is achieved when this comb spectrum is subject to the action of a frequency-domain parabolic phase filter according to the following first equation:

$$H_T\left(\omega\right)=e^{j\frac{\theta\omega^2}{2}}$$

For the observation of the Talbot effect the parameter $\theta$ is given by the following second equation:

$$2\pi\left|\theta\right|=\frac{p}{q}T^2$$

where $p$ and $q$ are two mutually prime natural numbers. The transfer function given by equation (1) has the form of that of a dispersive medium and this is the reason behind the fact that many of the practical implementations of the temporal Talbot effect employ optical fibers, where $\theta=\beta_2 z$, where $\beta_2$ is the first order dispersion coefficient of the fiber and $z$ is the fiber length. A solution of equation (2) with $q=1$, also known as integer Talbot effect, results in output pulse trains corresponding to perfect reconstruction of the input train as if it never underwent dispersive propagation. If however, q>1, it is obtained a fractional Talbot effect in which output pulse trains are produced, where individual pulses are reconstructed but with a reduced pulse repetition period T/q.

In summary there is a repetition rate multiplication of the input pulse train and output pulses are referred to as temporal Talbot sub-images. Due to the requirement of energy conservation these output pulses have their energy content reduced by a factor of $q$. The basic equations for the temporal Talbot effect are the following given an input periodic pulse train (represented without loss of generality by a train of Dirac delta functions) according to the following third equation:

$$\psi(t)=\sum_{n=-\infty}^{\infty}\delta(t-nT)\Leftrightarrow\tilde{\psi}(\omega)=\frac{2\pi}{T}\sum_{k=-\infty}^{\infty}\delta\left(\omega-\frac{2\pi k}{T}\right)$$

Then, the output signal from a medium providing a transfer function given by the first equation and the second equation is given by the following fourth equation:

$$\psi'(t)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'(\omega)=\frac{2\pi}{T}\sum_{k=-\infty}^{\infty}\delta\left(\omega-k\frac{2\pi}{T}\right)e^{j\pi\frac{p}{q}k^2}$$

where $s$ and $c$ are given by table 1:

Table 1

| Parity of $p,q$ | $s$ | $c$ |
|---|---|---|
| $p$ is Even and $q$ Odd | $p\left(\left[\dfrac{1}{p}\right]_{\mathrm{mod}q}\right)^2$ | $\dfrac{q-1}{4}+\dfrac{1-(p/q)}{2}$ |
| $p$ is Odd and $q$ Odd | $8p\left[\dfrac{1}{2}\right]_{\mathrm{mod}q}\left(\left[\dfrac{1}{2p}\right]_{\mathrm{mod}q}\right)^2$ | $\dfrac{q-1}{4}+\dfrac{1-(p/q)}{2}$ |
| $p$ is Odd and $q$ Even | $p\left(\left[\dfrac{1}{p}\right]_{\mathrm{mod}q}\right)^2$ | $-\dfrac{p}{4}-\dfrac{1-(p/q)}{2}$ |

wherein the operator [] stands for the integer part.

The fourth equation and table 1 include both the cases of integer and fractional Talbot effect. Note by comparing the fourth equation and table 1 that while temporal Talbot sub-images are rate-multiplied replicas of the input pulse train, their power spectra is identical to that of the input train, a logical consequence of the fact that the involved transformation is simply a modification of the input phase distribution along the frequency domain. What is not so obvious is that the temporal Talbot sub-images acquire a temporal phase variation that follows a Talbot condition.

The present invention implements a temporal Talbot processor using a programmable photonic circuit without needing a dispersive medium. The present invention provides a programmable photonic circuit configured to provide a structure capable of providing a frequency-dependent parabolic phase shift as given by the spectral domain description of the fourth equation, wherein the programmable integrated circuit, can be reconfigured, if required, to provide different values of the multiplication factor "q".

The invention also relates to a method of implementation of a temporal Talbot processor using a programmable photonic integrated circuit comprising:

-    at least a fiber;
-    an input periodic train of pulses comprising a repetition period T, wherein its representation in the dual Fourier Domain is a frequency comb with linear line spacing given by $f_r=1/T$, wherein the method comprises:

•    a step of subjecting the frequency comb to the action of a frequency-domain parabolic phase filter according to the following first equation:

$$H_T(\omega)=e^{j\frac{\theta\omega^2}{2}}$$

thus allowing to implement the temporal Talbot processor,

wherein the parameter $\theta$ is given by the following second equation:

$$2\pi\left|\theta\right| = \frac{p}{q}T^2$$

wherein $p$ and $q$ are two mutually prime natural numbers,
wherein the transfer function $H_T(\omega)$ has the form of that of a dispersive medium,
wherein $\theta = \beta_2 z$, being $\beta_2$ the first order dispersion coefficient of the at least a fiber and "z" is the length of the at least a fiber, and

- a step of implementing an integer Talbot processor if q=1, thus resulting in output pulse trains corresponding to perfect reconstruction of an input train as if it never underwent dispersive propagation, or
- a step of implementing a fractional Talbot processor if q>1, thus resulting in output pulse trains where individual pulses are reconstructed but with a reduced pulse repetition period T/q.

Optionally, the method of implementation of a temporal Talbot processor uses a programmable photonic integrated circuit, wherein the input periodic train of pulses comprises a train of Dirac delta functions according to the following third equation:

$$\psi(t) = \sum_{n=-\infty}^{\infty} \delta(t - nT) \Leftrightarrow \tilde{\psi}(\omega) = \frac{2\pi}{T} \sum_{k=-\infty}^{\infty} \delta\left(\omega - \frac{2\pi k}{T}\right)$$

and the output signal from a medium providing the transfer function $H_T(\omega)$ is given by the following fourth equation:

$$\psi'(t) = \frac{e^{-j\pi c}}{\sqrt{q}} \sum_{n=-\infty}^{\infty} \delta\left(t - n\frac{T}{q} + p\frac{T}{2}\right) e^{-j\pi\frac{s}{m}n^2} \Leftrightarrow \tilde{\psi}'(\omega) = \frac{2\pi}{T} \sum_{k=-\infty}^{\infty} \delta\left(\omega - k\frac{2\pi}{T}\right) e^{j\pi\frac{p}{q}k^2}$$

wherein if "p" is even and "q" is odd, "s" follows an expression $p\left(\left[\frac{1}{p}\right]_{\mathrm{mod}q}\right)^2$ and "c" follows an expression

$$\frac{q-1}{4} + \frac{1-(p/q)}{2};$$

wherein if "p" is odd and "q" is odd, "s" follows an expression $8p\left[\frac{1}{2}\right]_{\mathrm{mod}q}\left(\left[\frac{1}{2p}\right]_{\mathrm{mod}q}\right)^2$ and "c" follows an expression $\frac{q-1}{4} + \frac{1-(p/q)}{2}$; and

wherein if "p" is odd and "q" is even, "s" follows an expression $p\left(\left[\frac{1}{p}\right]_{\mathrm{mod}q}\right)^2$ and "c" follows an expression

$$-\frac{p}{4} - \frac{1-(p/q)}{2};$$

wherein the operator [] stands for the integer part.

Optionally, when the programmable photonic integrated circuit comprises a N+1 Scissor ring cavities, the method comprises:

- a step of inputting the input periodic train of pulses comprising a repetition period T, on an upper waveguide bus that connects the N+1 Scissor ring cavities, each one comprising a repetition period T being a round-trip delay including an internal phase shifter $\phi_i$, and
- a step of collecting the output pulse trains from the Scissor ring cavities by a lower waveguide bus, which provides additional phase shifters $\varphi_i$ and combines all the outputs towards an device exit.

## DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

Figure 1 shows the implementation of the temporal Talbot processor using programmable photonic circuits based on a N+1 Scissor ring cavities, according to the invention.
Figure 2 shows the frequency selection of the input comb lines using programmable in-cavity phase shifters for the implementation of the temporal Talbot processor using programmable photonic circuits according to the invention.
Figure 3 shows a Temporal Talbot processor using a hexagonal waveguide mesh emulating 3 Scissor cavities.
Figure 4 shows the simulation results with a three-comb input signal showing the discrete parabolic phase response.

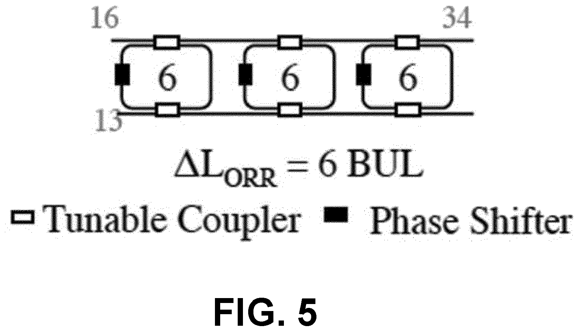

Figure 5 shows a Scissor filter emulated using a hexagonal waveguide mesh.

## PREFERRED EMBODIMENT OF THE INVENTION

The following is a detailed description of the programmable photonic circuit of the invention configured to implement a temporal Talbot processor, i.e., configured to provide a structure capable of providing a frequency-dependent parabolic phase shift as given by the spectral domain description of the following equation:

$$\psi'(t)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'(\omega)=\frac{2\pi}{T}\sum_{k=-\infty}^{\infty}\delta\left(\omega-k\frac{2\pi}{T}\right)e^{j\pi\frac{p}{q}k^2}$$

wherein the programmable integrated circuit, can be reconfigured, if required, to provide different values of the multiplication factor "q".

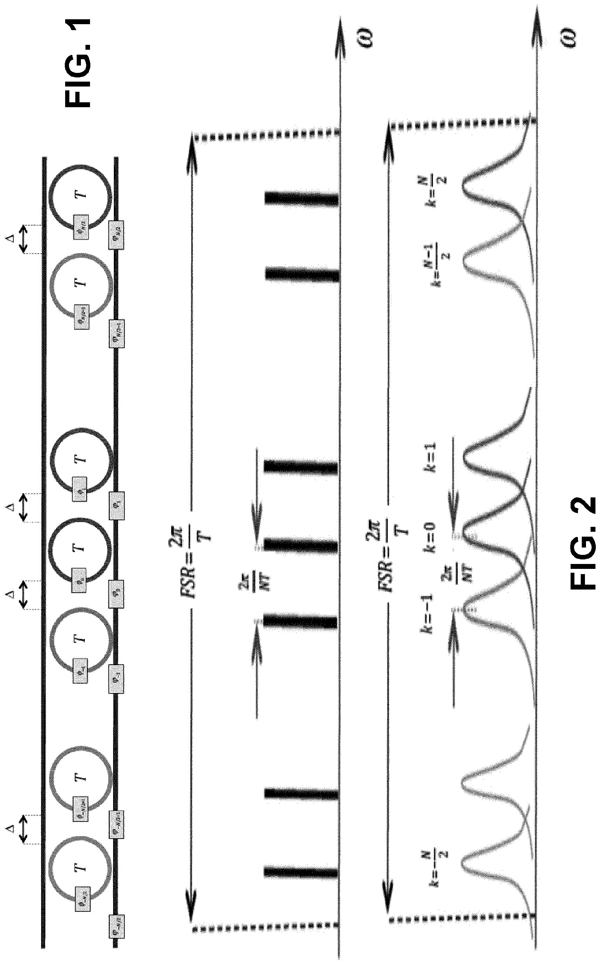

Figure 1 shows a possible implementation based on a Scissor structure. The input periodic repetition pulse sequence is configured to be input on an upper waveguide bus that connects N+1 identical ring cavities, each one featuring a round-trip delay T and including an internal phase shifter $\phi_i$. Output signals from the rings are collected by a lower waveguide bus, which provides additional phase shifters $\varphi_i$ and combines all the outputs towards the device exit. The operation of the device is as follows. Each ring cavity implements a band-pass spectral resonance between the upper and the lower waveguide bus within the available free spectral range given by $f_r=1/T$ ($f_r$ is denoted as FSR in the Figures). The internal phase shifter in each cavity is tuned to select one and only one of the carriers in the optical comb of the input signal as shown in Figure 2. This carrier is passed onto the lower waveguide bus, while the rest are not affected by the cavity filter and proceed to the next ring cavity. In order to sequentially select a different carrier of the frequency comb, the phase shifter in cavity i=k, k=-N, -N+1..., 0, 1, , N are programmed to provide a phase shift given by:

$$\phi_k=\frac{2\pi}{N}k$$

The phase shifters in the lower waveguide bus are programmed to:

a) provide the required Talbot phase shift for each filtered carrier in the comb as given by equation

$$\psi'(t)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'(\omega)=\frac{2\pi}{T}\sum_{k=-\infty}^{\infty}\delta\left(\omega-k\frac{2\pi}{T}\right)e^{j\pi\frac{p}{q}k^2}$$

and/or

b) compensate for the inter-cavity phase shifts $\Delta$ in the upper waveguide bus; and/or

c) compensate for the action of the phase shifters for other frequencies in the upper waveguide bus. This can be achieved by setting the following values:

$$\varphi_k=\pi(p/q)k^2-\sum_{r=-N/2}^{k-1}\varphi_r-\left(\frac{N}{2}+k\right)\Delta$$

It has to be understood that the filtered and phase shifted carriers in the lower waveguide bus will be bypassed by all the cavities encountered upon propagation from right to left. At the left end of the lower waveguide bus a combined signal with spectrum given by equation

$$\psi'(t)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'(\omega)=\frac{2\pi}{T}\sum_{k=-\infty}^{\infty}\delta\left(\omega-k\frac{2\pi}{T}\right)e^{j\pi\frac{p}{q}k^2}$$

will be collected.

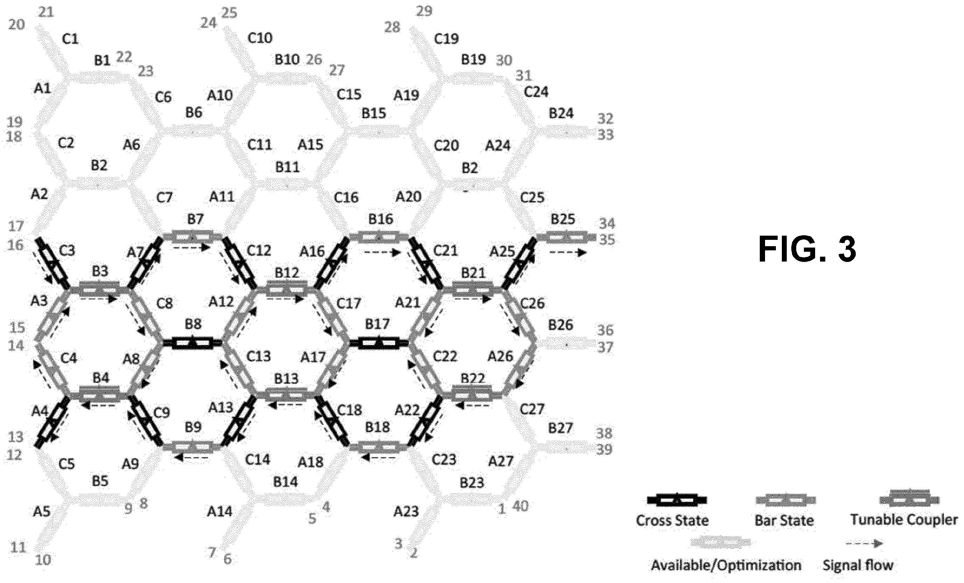

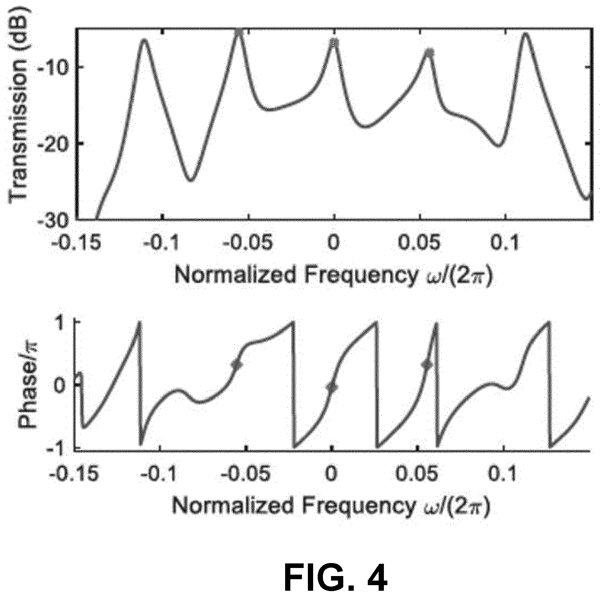

An interesting feature of this configuration is that the pulse repetition rate can be changed by programming a new value for $q$ in the phase shifters of the lower waveguide bus. It is also possible to emulate this temporal Talbot processor by means of an integrated waveguide mesh, as these are capable of emulating Scissor structures. Moreover, the external tunable basic units (TBUs) connecting the cavities can be programmed to provide the required phase shifting values in the lower waveguide bus. Figure 3 shows an example of a possible configuration for a temporal Talbot processor using a hexagonal waveguide mesh. A simulation of a designed structure for processing a three comb input signal using an hexagonal waveguide mesh shown in Figure 4 shows that it is possible to achieve the required parabolic phase dependence required by the equation

$$\psi'(t)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'(\omega)=\frac{2\pi}{T}\sum_{k=-\infty}^{\infty}\delta\left(\omega-k\frac{2\pi}{T}\right)e^{j\pi\frac{p}{q}k^2}$$

## Claims

1.  Programmable photonic integrated circuit configured to implement a temporal Talbot processor, wherein the programmable photonic integrated circuit comprises:

    - at least a fiber;
    - an input periodic train of pulses comprising a repetition period T, wherein its representation in the dual Fourier Domain is a frequency comb with linear line spacing given by $f_r=1/T$, wherein the frequency comb, once subjected to the action of a frequency-domain parabolic phase filter according to the following first equation:

$$H_T(\omega)=e^{j\frac{\theta\omega^2}{2}}$$

    allows to implement the temporal Talbot processor,
    wherein the parameter $\theta$ is given by the following second equation:

$$2\pi|\theta| = \frac{p}{q}T^2$$

wherein $p$ and $q$ are two mutually prime natural numbers,

wherein the transfer function $H_T(\omega)$ has the form of that of a dispersive medium,

wherein $\theta = \beta_2 z$, being $\beta_2$ the first order dispersion coefficient of the at least a fiber and "z" is the length of the at least a fiber, and

wherein if q=1, an integer Talbot processor is implemented, resulting in output pulse trains corresponding to perfect reconstruction of an input train as if it never underwent dispersive propagation, or

wherein if q>1, a fractional Talbot processor is implemented, resulting in output pulse trains where individual pulses are reconstructed but with a reduced pulse repetition period T/q.

2. Programmable photonic integrated circuit according to claim 1, wherein the input periodic train of pulses comprises a train of Dirac delta functions according to the following third equation:

$$\psi(t) = \sum_{n=-\infty}^{\infty} \delta(t-nT) \Leftrightarrow \tilde{\psi}(\omega) = \frac{2\pi}{T}\sum_{k=-\infty}^{\infty} \delta\left(\omega - \frac{2\pi k}{T}\right)$$

and the output signal from a medium providing the transfer function $H_T(\omega)$ is given by the following fourth equation:

$$\psi'(t) = \frac{e^{-j\pi c}}{\sqrt{q}}\sum_{n=-\infty}^{\infty} \delta\left(t-n\frac{T}{q}+p\frac{T}{2}\right)e^{-j\pi\frac{s}{m}n^2} \Leftrightarrow \tilde{\psi}'(\omega) = \frac{2\pi}{T}\sum_{k=-\infty}^{\infty} \delta\left(\omega - k\frac{2\pi}{T}\right)e^{j\pi\frac{p}{q}k^2}$$

wherein if "p" is even and "q" is odd, "s" follows an expression $p\left(\left[\frac{1}{p}\right]_{\mathrm{mod}q}\right)^2$ and "c" follows an expression

$$\frac{q-1}{4} + \frac{1-(p/q)}{2} \; ;$$

wherein if "p" is odd and "q" is odd, "s" follows an expression $8p\left[\frac{1}{2}\right]_{\mathrm{mod}q}\left(\left[\frac{1}{2p}\right]_{\mathrm{mod}q}\right)^2$ and "c" follows an

expression $\dfrac{q-1}{4} + \dfrac{1-(p/q)}{2}$ ; and

wherein if "p" is odd and "q" is even, "s" follows an expression $p\left(\left[\frac{1}{p}\right]_{\mathrm{mod}q}\right)^2$ and "c" follows an expression

$$-\frac{p}{4} - \frac{1-(p/q)}{2} \; ;$$

wherein the operator [] stands for the integer part.

3. Programmable photonic integrated circuit according to any of the previous claims further comprising a N+1 Scissor ring cavities, wherein the input periodic train of pulses comprising a repetition period T is configured to be input on an upper waveguide bus that connects the N+1 Scissor ring cavities, each one comprising a repetition period T being a round-trip delay including an internal phase shifter $\phi_i$, and wherein the output pulse trains from the Scissor ring cavities are collected by a lower waveguide bus, which provides additional phase shifters $\varphi_i$ and combines all the outputs towards an device exit.

4. Programmable photonic integrated circuit according to claim 3, wherein each Scissor ring cavities implements a band-pass spectral resonance between the upper and the lower waveguide bus within the available free spectral range given by $f_r=1/T$, and

 wherein the internal phase shifter in each cavity is tuned to select one and only one of the carriers in the optical comb of the input signal;
 wherein the carrier of the carriers that is selected is configured to be passed onto the lower waveguide bus, while the rest of the carries are not affected by the cavity filter and proceed to the next ring cavity.

5. Programmable photonic integrated circuit according to claim 4, wherein, in order to sequentially select a different carrier of the frequency comb, the phase shifter in cavity i=k, k=-N, -N+1..., 0, 1, , N are configured to be programmed to provide a phase shift given by:

$$\phi_k = \frac{2\pi}{N}k$$

6. Programmable photonic integrated circuit according to claim 5, where the phase shifters in the lower waveguide bus are programmed to

 a) compensate for the inter-cavity phase shifters $\Delta$ in the upper waveguide bus;
 and/or
 b) compensate for the action of the phase shifters for other frequencies in the upper waveguide bus;

 by setting the following values:

$$\varphi_k = \pi\left(p/q\right)k^2 - \sum_{r=-N/2}^{k-1} \varphi_r - \left(\frac{N}{2}+k\right)\Delta$$

7. Programmable photonic integrated circuit according to any of the previous claims, wherein the pulse repetition rate can be changed by programming a new value for $q$ in the phase shifters of the lower waveguide bus.

8. Programmable photonic integrated circuit according to any of the previous claims, wherein the temporal Talbot processor is emulated by means of an integrated waveguide mesh.

9. Programmable photonic integrated circuit according to any of the previous claims, further comprising external tunable basic units (TBUs) configured to connect the cavities and to be programmed to provide the required phase shifting values in the lower waveguide bus.

10. Programmable photonic integrated circuit according to claim 8, wherein the integrated waveguide mesh is a hexagonal waveguide mesh.

11. Method of implementation of a temporal Talbot processor using a programmable photonic integrated circuit comprising:

 - at least a fiber;
 - an input periodic train of pulses comprising a repetition period T, wherein its representation in the dual Fourier Domain is a frequency comb with linear line spacing given by $f_r=1/T$, wherein the method comprises:

 • a step of subjecting the frequency comb to the action of a frequency-domain parabolic phase filter according to the following first equation:

$$H_T\left(\omega\right)=e^{j\frac{\theta\omega^2}{2}}$$

thus allowing to implement the temporal Talbot processor,

wherein the parameter $\theta$ is given by the following second equation:

$$2\pi\left|\theta\right|=\frac{p}{q}T^2$$

wherein $p$ and $q$ are two mutually prime natural numbers,
wherein the transfer function $H_T(\omega)$ has the form of that of a dispersive medium,
wherein $\theta=\beta_2 z$, wherein $\beta_2$ is the first order dispersion coefficient of the at least a fiber and "z" is the length of the at least a fiber, and

• a step of implementing an integer Talbot processor if q=1, thus resulting in output pulse trains corresponding to perfect reconstruction of an input train as if it never underwent dispersive propagation, or
• a step of implementing a fractional Talbot processor if q>1, thus resulting in output pulse trains where individual pulses are reconstructed but with a reduced pulse repetition period T/q.

12. Method of implementation of a temporal Talbot processor using a programmable photonic integrated circuit according to claim 11, wherein the input periodic train of pulses comprises a train of Dirac delta functions according to the following third equation:

$$\psi\left(t\right)=\sum_{n=-\infty}^{\infty}\delta\left(t-nT\right)\Leftrightarrow\tilde{\psi}\left(\omega\right)=\frac{2\pi}{T}\sum_{k=-\infty}^{\infty}\delta\left(\omega-\frac{2\pi k}{T}\right)$$

and the output signal from a medium providing the transfer function $H_T(\omega)$ is given by the following fourth equation:

$$\psi'\left(t\right)=\frac{e^{-j\pi c}}{\sqrt{q}}\sum_{n=-\infty}^{\infty}\delta\left(t-n\frac{T}{q}+p\frac{T}{2}\right)e^{-j\pi\frac{s}{m}n^2}\Leftrightarrow\tilde{\psi}'\left(\omega\right)=\frac{2\pi}{T}\sum_{k=-\infty}^{\infty}\delta\left(\omega-k\frac{2\pi}{T}\right)e^{j\pi\frac{p}{q}k^2}$$

wherein if "p" is even and "q" is odd, "s" follows an expression $p\left(\left[\frac{1}{p}\right]_{\mathrm{mod}q}\right)^2$ and "c" follows an expression $\frac{q-1}{4}+\frac{1-\left(p/q\right)}{2}$ ;

wherein if "p" is odd and "q" is odd, "s" follows an expression $8p\left[\frac{1}{2}\right]_{\mathrm{mod}q}\left(\left[\frac{1}{2p}\right]_{\mathrm{mod}q}\right)^2$ and "c" follows an expression $\frac{q-1}{4}+\frac{1-\left(p/q\right)}{2}$ ; and

wherein if "p" is odd and "q" is even, "s" follows an expression $p\left(\left[\dfrac{1}{p}\right]_{\mathrm{mod}q}\right)^2$ and "c" follows an expression

$$-\frac{p}{4}-\frac{1-\left(p/q\right)}{2};$$

wherein the operator [] stands for the integer part.

13. Method of implementation of a temporal Talbot processor using a programmable photonic integrated circuit according to any of claims 11 or 12, wherein the programmable photonic integrated circuit further comprises a N+1 Scissor ring cavities, wherein the method comprises

    • a step of inputting the input periodic train of pulses comprising a repetition period T, on an upper waveguide bus that connects the N+1 Scissor ring cavities, each one comprising a repetition period T being a round-trip delay including an internal phase shifter $\phi_i$, and
    • a step of collecting the output pulse trains from the Scissor ring cavities by a lower waveguide bus, which provides additional phase shifters $\varphi_i$ and combines all the outputs towards an device exit.

FIG. 1

FIG. 2

FIG. 3

EP 4 644 958 A1

FIG. 4

$$\Delta L_{ORR} = 6 \text{ BUL}$$

□ Tunable Coupler  ■ Phase Shifter

# FIG. 5

EP 4 644 958 A1

Europäisches
Patentamt

European
Patent Office

Office européen
des brevets

## EUROPEAN SEARCH REPORT

**Application Number**

EP 24 38 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BILLAULT VINCENT ET AL: "Phase Noise of Optical Pulse Trains Generated by Talbot Effect in Frequency Shifting Loops", JOURNAL OF LIGHTWAVE TECHNOLOGY, IEEE, USA, vol. 39, no. 8, 15 January 2021 (2021-01-15), pages 2336-2347, XP011845420, ISSN: 0733-8724, DOI: 10.1109/JLT.2021.3052041 [retrieved on 2021-03-23] | 1-3,5,6, 10,12,13 | INV. G02B6/28 |
| Y | * abstract * * Section A; page 7 * * Section II; page 2 * * Section III; page 4 * * page 5 * * page 8 * | 4,7-9 | |
| Y | DANIEL P?REZ ET AL: "Multipurpose silicon photonics signal processor core", NATURE COMMUNICATIONS, vol. 8, no. 1, 21 September 2017 (2017-09-21), XP055429173, DOI: 10.1038/s41467-017-00714-1 * page 4 - page 6 * * figures 2-4 * | 4,7-9 | TECHNICAL FIELDS SEARCHED (IPC) G02F G02B |

-----

-----

-/--

The present search report has been drawn up for all claims

| Place of search | Date of completion of the search | Examiner |
|---|---|---|
| The Hague | 24 September 2024 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

page 1 of 3

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARAM REZA ET AL: "Programmable Fiber-Optics Pulse Repetition-Rate Multiplier", JOURNAL OF LIGHTWAVE TECHNOLOGY, IEEE, USA, vol. 34, no. 2, 15 January 2016 (2016-01-15), pages 448-455, XP011599022, ISSN: 0733-8724, DOI: 10.1109/JLT.2015.2500538 [retrieved on 2016-02-12] * figure 1 * | 1-13 | |
| A | ZHENG BOFANG ET AL: "Comb Spacing Multiplication Enabled Widely Spaced Flexible Frequency Comb Generation", JOURNAL OF LIGHTWAVE TECHNOLOGY, IEEE, USA, vol. 36, no. 13, 1 July 2018 (2018-07-01), pages 2651-2659, XP011683559, ISSN: 0733-8724, DOI: 10.1109/JLT.2018.2820223 [retrieved on 2018-05-11] * figures 1-2 * | 1-13 | TECHNICAL FIELDS SEARCHED (IPC) |
| A | CN 114 300 928 A (UNIV HANGZHOU DIANZI) 8 April 2022 (2022-04-08) * figure 1 * | 1-13 | |

-/--

The present search report has been drawn up for all claims

| Place of search | Date of completion of the search | Examiner |
|---|---|---|
| The Hague | 24 September 2024 | Votini, Stefano |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

page 2 of 3

Europäisches Patentamt

European Patent Office

Office européen des brevets

**EUROPEAN SEARCH REPORT**

**Application Number**

EP 24 38 2470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHI JIANG ET AL: "Spectral Line-by-Line Pulse Shaping on an Optical Frequency Comb Generator", IEEE JOURNAL OF QUANTUM ELECTRONICS, IEEE, USA, vol. 43, no. 12, 1 December 2007 (2007-12-01), pages 1163-1174, XP011196503, ISSN: 0018-9197, DOI: 10.1109/JQE.2007.907033 * figure 11a * ----- | 1-13 | |

**TECHNICAL FIELDS SEARCHED (IPC)**

The present search report has been drawn up for all claims

| Place of search | Date of completion of the search | Examiner |
|---|---|---|
| The Hague | 24 September 2024 | Votini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2470

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | Publication date | Patent family member(s) | Publication date |
|---|---|---|---|
| CN 114300928 A | 08-04-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. JANNSON** ; **J. JANNSON**. Temporal self-imaging effect in single-mode fibers. *J. Opt. Soc. Am.*, 1981, vol. 71, 1373-1376
- **J. AZAÑA** ; **M. A. MURIEL**. Temporal self-imaging effects: theory and application for multiplying pulse repetition rates. *IEEE J. Sel. Top. Quantum Electron*, 2001, vol. 7, 728-744
- **H. GUILLET DE CHATELLUS** ; **E. LACOT** ; **W. GLASTRE** ; **O. JACQUIN** ; **O. HUGON**. Theory of Talbot lasers. *Phys. Rev. A*, 2013, vol. 88, 033-828